Europäisches Patentamt

European Patent Office

Office européen des brevets

(19)

(11) Numéro de publication: **0 042 344**
**B1**

(12) **FASCICULE DE BREVET EUROPEEN**

(45) Date de publication du fascicule du brevet: **19.09.84**

(21) Numéro de dépôt: **81400956.9**

(22) Date de dépôt: **16.06.81**

(51) Int. Cl.³: **G 05 D 23/20**

(54) **Dispositif de régulation de température.**

(30) Priorité: **16.06.80 FR 8013329**

(43) Date de publication de la demande:
**23.12.81 Bulletin 81/51**

(45) Mention de la délivrance du brevet:
**19.09.84 Bulletin 84/38**

(84) Etats contractants désignés:
**BE DE GB IT NL**

(56) Documents cités:
**DE-A-2 719 813**
**FR-A-2 415 946**
**US-A-4 191 328**

(73) Titulaire: **SOCIETE GENERALE DE FONDERIE**
**Société Anonyme Française**
**8 place d'Iéna**
**F-75783 Paris Cedex 16 (FR)**

(72) Inventeur: **Poumey, Michel**
**87, rue Saint Maur**
**F-75011 Paris (FR)**
Inventeur: **Leroi, Michel**
**5, rue du Docteur Pestel**
**F-02200 Soissons (FR)**
Inventeur: **Grimaud, Jean-Michel**
**55, boulevard d'Andilly**
**F-95160 Montmorency (FR)**
Inventeur: **Camurat, Alain**
**28, avenue Henri Barbusse**
**F-94200 Ivry sur seine (FR)**

(74) Mandataire: **Joly, Jean-Jacques et al**
**CABINET BEAU DE LOMENIE 55, rue**
**d'Amsterdam**
**F-75008 Paris (FR)**

EP 0 042 344 B1

## Description

La présente invention concerne un dispositif de régulation de température.

Le domaine d'application plus particulièrement visé est celui de la régulation de température ambiante pour le chauffage ou la climatisation de locaux, notamment d'habitations.

On connaît des dispositifs de régulation de température ambiante du type comprenant:

— un premier ensemble formant thermostat-programmateur et comportant un thermostat d'ambiance électronique pour fournir une grandeur électrique variable en fonction de l'écart entre une température mesurée et une température de consigne, et un horloge de programmation destinée à commander la fermeture d'un contact électrique à un instant prédéterminé,

— un deuxième ensemble d'alimentation et de commande comportant des moyens pour l'alimentation électrique des circuits du premier et du deuxième ensemble, et des moyens de commande d'un appareil de chauffage ou de climatisation, et,

— une liaison reliant le premier et le deuxième ensemble pour alimenter en tension électrique le premier ensemble à partir desdits moyens d'alimentation et pour transmettre au deuxième ensemble une information variable en fonction de ladite grandeur électrique et de l'état ouvert ou fermé dudit contact.

Les ensembles thermostat-programmateur et régulation-commande sont usuellement montés dans deux boîtiers séparés, le premier étant installé dans une pièce de séjour et le second dans une pièce de service au voisinage de l'appareil de chauffage ou de climatisation. Dans la pratique, ces deux boîtiers sont généralement reliés par au moins quatre conducteurs ayant chacun une fonction particulière: deux sont prévus pour l'alimentation du boîtier thermostat-programmateur et les deux autres pour transmettre au boîtier d'alimentation et de commande respectivement une tension analogique représentant la grandeur électrique fournie par le thermostat et un signal tout ou rien représentant l'état du contact de l'horloge de programmation.

Il a été proposé dans le certificat d'utilité FR 2 415 946 de réduire à deux le nombre de conducteurs reliant l'ensemble d'alimentation et de commande et l'ensemble thermostat-programmateur. Les conducteurs sont parcourus par un courant alternatif et l'information représentant l'écart entre température mesurée et température de consigne et l'état du contact de l'horloge de programmation est convertie globalement en un déséquilibre entre les demi-ondes positives et négatives de la tension aus bornes des conducteurs de liaison. C'est la valeur algébrique de la différence d'amplitude entre les demi-ondes positives et négatives qui est utilisée pour commander l'appareil de chauffage. Au niveau de l'ensemble de commande, il n'est donc pas possible de distinguer entre un déséquilibre dû à un écart de température et un déséquilibre dû à un changement d'étate du contact d'horloge.

Aussi, la présente invention a-t-elle pour but de fournir un dispositif de régulation de température du type défini en tête de la description, dans lequel l'information représentant l'écart de température et celle représentant l'état du contact d'horloge sont transmises séparément entre l'ensemble thermostat-programmateur et l'ensemble d'alimentation et de commande et ce au moyen d'une liaison bifilaire.

Ce but est atteint du fait que, conformément à l'invention:

— l'ensemble thermostat-programmateur comporte un générateur de signaux électriques pour superposer au courant d'alimentation, circulant dans les conducteurs pour alimenter ce premier ensemble, des impulsions de courant dont au moins une première caractéristique variable est représentative de la grandeur électrique fournie par le thermostat et dont au moins une seconde caractéristique variable différente de la première est représentative de l'état du contact de l'horloge de programmation, les première et seconde caractéristique des impulsions étant choisies parmi l'amplitude, la fréquence, la durée et le rapport cyclique de ces impulsions, et

— l'ensemble d'alimentation et de commande comporte des premiers moyens de détection de la première caractéristique des impulsions superposées au courant d'alimentation et des seconds moyens de détection de la seconde caractéristique de ces impulsions afin de produire un premier signal fonction de la grandeur électrique fournie par le thermostat et un second signal fonction de l'état du contact de l'horloge de programmation.

Selon un mode préféré de réalisation du dispositif conforme à l'invention, l'ensemble thermostat-programmateur comprend des moyens de redressement pour permettre l'alimentation des circuits de cet ensemble avec une polarité convenable, indépendamment de la nature continue ou alternative et de la polarité de la tension entre les conducteurs de la ligne bifilaire à leur raccordement à l'ensemble thermostat-programmateur. Les deux conducteurs de la ligne bifilaire sont alors permutables sans affecter le fonctionnement de l'installation.

Le courant d'alimentation circulant dans les conducteurs et auquel est superposé le signal supplémentaire peut être un courant continu, ou un courant variable. Dans ce dernier cas, sa fréquence doit être faible par rapport à celle du signal supplémentaire qui lui est superposé afin de ne pas perturber la détection. On peut ainsi envisager une alimentation de l'ensemble thermostat-programmateur au moyen d'un courant alternatif avec une fréquence pouvant aller jusqu'à 50 Hz.

D'autres particularités et avantages du dispositif conforme à l'invention ressortiront à la lecture de la description faite ci-après, à titre indicatif mais non limitatif, en référence aux dessins joints sur lesquels:

— la figure 1 est un schéma d'ensemble d'un dispositif de régulation de température ambiante selon l'invention,

— la figure 2 est un schéma plus détaillé d'un mode de réalisation de l'ensemble d'alimentation et de commande du dispositif illustré par la figure 1, et

— la figure 3 montre des exemples de formes d'onde de signaux en différents points du dispositif illustré par la figure 1.

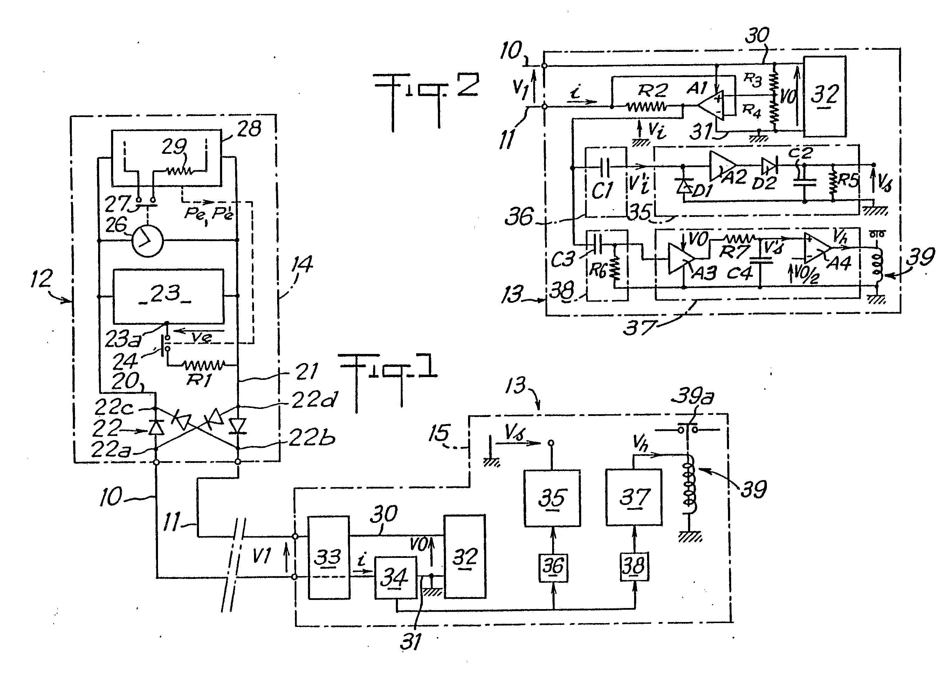

Sur la figure 1, les références 10 et 11 désignent les deux conducteurs d'une liaison bifilaire qui, seule, relie l'un à l'autre un ensemble thermostat-programmateur 12 et un ensemble alimentation-commande 13. Ces ensembles sont montés dans deux boîtiers respectifs 14, 15 (schématisés par des traits mixtes). Le boîtier 14 est installé par exemple dans une pièce de séjour d'une habitation à chauffer ou à climatiser tandis que le boîtier 15 est installé dans une pièce de service à proximité d'un appareil de chauffage ou de climatisation (non représenté).

A l'entrée de l'ensemble 12 est monté un pont de diodes 22 dont les deux bornes d'entrées 22a, 22b, sont reliées aux conducteurs 10, 11 et dont les deux bornes de sortie 22c, 22d sont connectées à des lignes d'alimentation 20, 21. Si l'on néglige la chute de tension entre les diodes du pont 22, la tension d'alimentation entre les lignes 21 et 22 est égale à la tension V1 entre les bornes 22a, 22b. Cette tension V1 est fournie par un circuit d'alimentation à tension constante faisant partie de l'ensemble 11 et est transmise par les conducteurs 10 et 11. La présence do pont de diodes 22 permet de conserver les mêmes polarités sur les bornes de sortie 22c, 22d dans le cas où les branchements des conducteurs 10 et 11 sur les bornes d'entrée 22a et 22b sont permutés. On conserve ainsi toujours une différence de potentiel de même signe entre les lignes 20 et 21 et l'alimentation des composants de l'ensemble 12 est assurée de façon convenable quel que soit le branchement des conducteurs 10 et 11.

L'ensemble 12 comporte un thermostat électronique 23 qui fournit une tension analogique Ve variable en fonction de l'écart entre une température mesurée et une température de consigne. La température mesurée peut être la température intérieure réelle régnant à ximité du boîtier 14 et mesurée au moyen d'une sonde incorporée à ce boîtier. La température mesurée peut aussi être la température extérieure á l'habitation. La température de consigne est déterminée au moyen d'un organe de réglage actionné manuellement et monté sur le boîtier. Dans certains cas, las tension analogique Ve peut être élaborée en tenant compte à la fois des températures extérieure, intérieure et de consigne. Il en est ainsi notamment avec le thermostat électronique décrit dans la demande de brevet FR 78 26.699.

La tension analogique Ve est disponible entre une borne de sortie 23a du thermostat 23 et la ligne 21. Cette borne de sortie 23a est reliée à la ligne 21 par l'intermédiaire d'un interrupteur commandé 24 et d'une résistance R1 branchés en série. L'interrupteur 24 est de préférence un interrupteur statique à diodes ou à transistor.

L'ensemble 12 comporte encore une horloge de programmation 26 entraînée par un moteur (non représenté) qui est alimenté par les lignes 20, 21. A un instant t déterminé de façon bien connue en soi par préréglage d'un repère, l'horloge 26 commande la fermeture d'un interrupteur 27 pour une période qui peut également être prédéterminée.

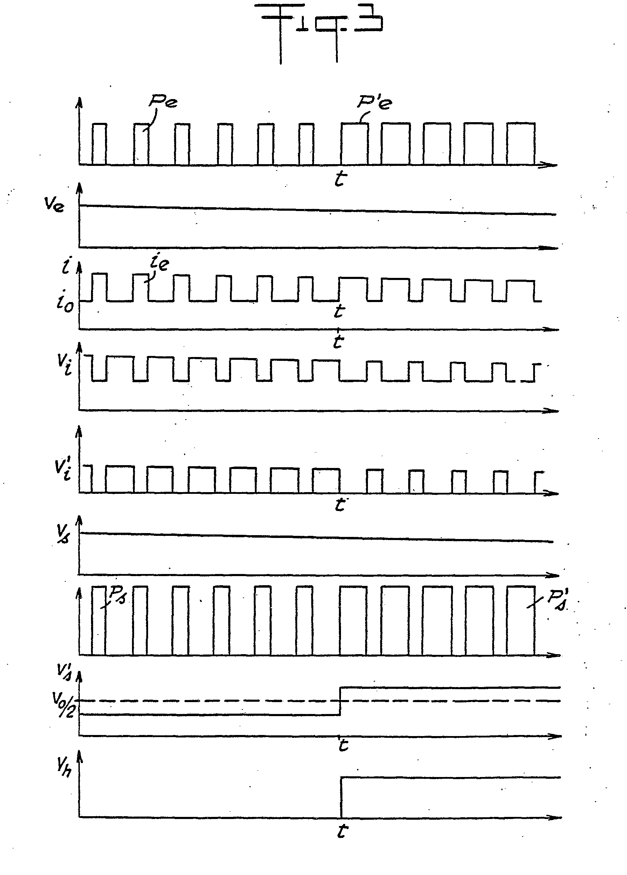

L'ensemble 12 comporte enfin une base de temps 28 qui produit des impulsions rectangulaires. Cette base de temps est constituée par exemple par un oscillateur libre fournissant des impulsions de fréquence fixe et de rapport cyclique variable selon qu'une ou plusieurs résistances 29 du circuit de l'oscillateur sont ou ne sont pas mises en service du fait de la fermeture ou de l'ouverture de l'interrupteur 27. Dans l'exemple illustré (figure 3), le rapport cyclique des impulsions Pe produites lorsque l'interrupteur 27 est ouvert, a une valeur assez nettement inférieure à 1, tandis que le rapport cyclique des impulsions P'e produites lorsque l'interrupteur 27 est fermé a une valeur assez nettement supérieure à 1. Rappelons que le rapport cyclique est le quotient entre la durée des impulsions et la durée des intervalles de temps séparant deux impulsions consécutives.

L'ensemble 13 d'alimentation et de commande comporte un premier circuit d'alimentation 32 produisant une très basse tension VO entre deux lignes d'alimentation 30 (+VO) et 31 (masse). La tension VO a un niveau correspondant à celui des tensions d'alimentation des circuits électroniques usuels. Un circuit 33 reçoit la tension VO et produit la tension constante V1 entre ses bornes de sortie connectées aux conducteurs 10 et 11. La tension V1 est une fraction constante de la tension VO, indépendante du courant circulant dans les conducteurs 10 et 11. On a

$$V1 = k \cdot VO,$$

k étant un nombre constant inférieur à 1.

L'ensemble 13 comporte encore un circuit de mesure de courant 34 qui est branché de manière à fournir une tension Vi représentative du courant i parcourant les conducteurs 10 et 11. Le circuit 34 remplit donc une fonction de convertisseur courant-tension. Il est inséré sur un des conducteurs 10 et 11 ou sur un conducteur connecté à l'un de ces derniers, par exemple sur le conducteur 31.

L'ensemble 13 comporte enfin: un premier circuit détecteur 35 branché en sortie d'un filtre passehaut 36 et agencé de manière à détecter l'amplitude des variations périodiques de la composante non continue du courant i qui est appliqué au filtre 36, et un second circuit détecteur 37 branché en sortie d'un filtre passe-haut 38 et agencé de manière à détecter les modifications du rapport cyclique de la composante non continue du courant i qui est appliqué au filtre 38. En sortie du détecteur 35, on dispose d'une tension analogique Vs égale ou proportionnelle à la tension Ve. Le détecteur 37 délivre un signal Vh qui est appliqué la bobine d'excitation d'un relais 39 pour commander l'ouverture et la fermeture du contact 39*a* de ce relais en synchronisme avec l'ouverture et la fermeture du contact de l'interrupteur 27.

Le fonctionnement du dispositif décrit ci-dessus ainsi que la réalisation des circuits de l'ensemble 11 seront décrits ci-après de façon plus détaillée.

Sur la figure 3, on a représenté en premier la forme d'onde des impulsions Pe et P'e avant et après la fermeture de l'interrupteur 27 à un instant t.

Les impulsions Pe et P'e commandant des périodes de fermeture de l'interrupteur 24 dont les durées sont celles des impulsions Pe et P'e. Pendant chaque fermeture de l'interrupteur 24, une impulsion de courant ie est superposée au courant $i_o$ circulant dans le conducteur 21, ce courant $i_o$ représentant la somme des consommations constantes ou très lentement variables des circuits du thermostat 23, de l'horloge 26 et de la base de temps 28 tous alimentés à partir de la tension V1. Si r1 désigne la valeur ohmique de la résistance R1, chaque impulsion de courant ie a une aplitude égale à Ve/R1; le courant circulant dans les conducteurs 10 et 11 a la valeur $i_o$ lorsque l'interrupteur 24 est ouvert et la valeur $i_o$+Ve/R1 lorsque cet interrupteur est fermé. On notera que les rapports cycliques des impulsions de courant ie sont égaux à ceux des impulsions Pe et P'e (figure 3).

Selon le mode de réalisation de la figure 2, les circuits d'alimentation à tension constante 33 et de mesure de courant 34 comportent un amplificateur A1 alimenté sous la tension VO, et dont l'entrée non inverseuse est connectée au point commun entre deux résistances R3, R4 branchées en série entre les lignes 30 et 31. Le conducteur 11 est connecté, d'une part directement à l'entrée inverseuse de l'amplificateur A1, et, d'autre part, à la sortie de cet amplificateur par l'intermédiaire d'une résistance R2. Le conducteur 10 est connecté directement à la ligne 30.

L'amplificateur A1 asservit la tension V1 à être une fraction constante de VO. Si r2 et r4 désignent les valeurs ohmique des résistances R3 et R4, on a en permanence

$$V1 = \frac{r3}{r3+r4} VO$$

Par ailleurs, la tension Vi en sortie de l'amplificateur A1 est telle que:

$$Vi = VO - V1 - r2 \cdot i,$$

r2 désignant la valeur ohmique de la résistance R2 et i le courant dans le conducteur 11. VO, V1 et r2 étant constants, la tension Vi est bien représentative du courant i (figure 3).

Cette tension Vi est appliquée au filtre passe-haut 36 formé d'un condensateur C1. Une diode D1 branchée entre la sortie du filtre 36 et la masse empêche la composante alternative V'i de la tension Vi de devenir négative. Les variations de V'i sont donc ainsi référencées par rapport au potentiel de référence de l'ensemble d'alimentation et de commande (voir figure 3).

La composante V'i est amplifiée par un amplificateur A2. La sortie de l'amplificateur A2 est reliée à l'entrée d'un détecteur de crête comportant (figure 2) un diode D2 en série avec un condensateur C2 et une résistance R5 branchés en parallèle l'un avec l'autre entre la diode D2 et la masse. Au point commun entre D2, C2 et R5, on prélève une tension Vs dont l'amplitude est égale à l'amplitude de crête de la composante alternative V'i amplifiée par l'amplificateur A2. Cette composante alternative est constituée par les impulsions de courant ie, puisque $i_o$, l'autre composante de i est constante ou très lentement variable. En valeur absolue, on a:

$$V'i = r2 i_e = \frac{r2}{r1} i_e$$

En choisissant pour l'amplificateur A2 un gain égal à r1/r2, on a Vs=Ve (figure 3).

La modification du rapport cyclique des impulsions de courant à l'instant t n'a pas d'influence sur la détection de la tension analogique Ve. Par contre, cette modification constitue le signal tout ou rien qui est détecté par le détecteur 37.

Le signal Vi est appliqué au filtre passe-haut 38 formé d'un condensateur série C3 et d'une résistance R6 branchée entre le condensateur C3 et la masse (figure 2). La composante alternative ainsi disponible en sortie du filtre 38 est inversée au moyen d'un amplificateur inverseur A3. Cet amplificateur A3 est alimenté sous la tension VO et passe alternativement de l'état saturé bas (tension de sortie nulle) à l'état saturé haut (tension de sortie égale à VO). On retrouve donc en sortie de l'amplificateur A3 des impulsions rectangulaires Ps et P's d'amplitude égale à VO et dont la fréquence et le rapport cyclique sont ceux des impulsions de courant ie, donc ceux des impulsions Pe et P'e.

Pour détecter la modification du rapport cyclique des impulsions Ps et P's, celles-ci sont intégrées au moyen d'un circuit formé par une résistance R7 et un condensateur C4. La tension V's ainsi obtenue a une amplitude qui représente la valeur moyenne du signal formé par les impulsions Ps et P's (voir figure 3). Cette tension V's est comparée à la tension VO/2 au moyen d'un comparateur formé par un amplificateur A4 à grand gain.

La tension V's est inférieure ou supérieure à VO/2 selon que le rapport cyclique des impulsions d'amplitude VO est inférieur ou supérieur à 1. La tension en sortie de l'amplificateur A4 passe alors de la valeur nulle à la valeur Vh au moment t où le rapport cyclique des impulsions dépasse 1. Cette tension Vh commande la fermeture du contact du ralais 39 lequel est donc bien asservi à recopier l'interrupteur de l'horloge de programmation.

La tension Vs et le relais 39 commandent de façon connue en soi la marche de l'appareil de chauffage ou de climatisation associé à l'ensemble 13.

Les circuits de détection décrits en référence à la figure 2 sont donnés ici purement à titre d'exemple. D'autres types de circuits pourront bien sûr être utilisés pour détecter l'amplitude des impulsions de courant et les modifications du rapport cyclique de ces impulsions.

Par ailleurs, l'information consistant dans le passage de l'interrupteur 27 de l'état ouvert à l'état fermé, ou inversement, pourra être traduite, au niveau de la base de temps 28, par une modification de la période des impulsions sans modification de leur durée. La transmission et la détection de la tension analogique Ve ne s'en trouvent pas modifiées. La détection du changement d'état de l'interrupteur 27 nécessite alors de remplacer le détecteur 37. La détection de modification de rapport cyclique d'impulsions par un détecteur de modification de période (fréquence) d'impulsions.

On notera encore que la détection des impulsions de courant peut être réalisée de façon satisfaisante si le courant $i_o$ circulant dans les conducteurs et auquel sont superposées les impulsions de courant varie de façon relativement lente, c'est-à-dire avec une fréquence faible en regard de celle des impulsions de courant. Cette fréquence faible peut atteindre la valeur de celle du réseau (50 Hz). Dans ce cas, les filtres 36 et 38 de l'ensemble 13 sont conçus de manière à éliminer la composante alternative à basse fréquence du courant i pour ne laisser passer que les impulsions superposées au courant $i_o$. Du côté de l'ensemble 12, le pont de diodes 22 redresse la tension aus bornes des conducteurs 10, 11 pour assurer l'alimentation en continu des circuits du thermostat et du programmateur.

Enfin, l'injection dans les conducteurs d'un courant supplémentaire sous forme d'un ou plusieurs signaux modulés peut être combinée avec l'injection d'un courant sous forme d'impulsions dans le cas, par exemple, où des signaux analogiques et/ou des signaux tout ou rien additionnels doivent être transmis. Le courant supplémentaire peut être un signal modulé en amplitude ou modulé en fréquence.

Dans le cas d'un signal modulé en amplitude, les caractéristiques variables sont par exemple l'amplitude du signal modulé et la fréquence de la porteuse.

Dans le cas d'un signal modulé en fréquence, les caractéristiques variables sont par exemple la fréquence du signal modulé et l'amplitude.

**Revendications**

1. Dispositif de régulation de température comprenant: un premier ensemble (12) formant thermostat programmateur et comportant un thermostat d'ambiance électronique (23) pour fournir une grandeur éléctrique (Ve) variable en fonction de l'écart entre une température mesurée et une température de consigne, et une horloge de programmation (26) destinée à commander la fermeture d'un contact électrique (27) à un instant prédéterminé; un deuxième ensemble (13) d'alimentation et de commande comportant des moyens (32) pour l'alimentation électrique des circuits du premier et du deuxième ensemble, et des moyens de commande (39) d'un appareil de chauffage ou de climatisation; et une liaison bifilaire (10, 11) reliant le premier et le deuxième ensemble pour alimenter en tension électrique le premier ensemble à partir desdits moyens d'alimentation et pour transmettre au deuxième ensemble une information variable en fonction de ladite grandeur électrique (Ve) et de l'état ouvert ou fermé dudit contact (27), dispositif caractérisé en ce que:

— l'ensemble (12) thermostat-programmateur comporte un générateur (28, 14) de signaux électriques pour superposer au courant d'alimentation, circulant dans les conducteurs (10, 11) pour alimenter ce premier ensemble, des impulsions de courant dont au moins une première caractéristique variable est représentative de la grandeur électrique (Ve) fournie par le thermostat (23) et dont au moins une seconde caractéristique variable différente de la première est représentative de l'état du contact (27) de l'horloge de programmation, les première et seconde caractéristiques des impulsions étant choisies parmi l'amplitude, la fréquence, la durée et le rapport cyclique des ces impulsions, et

— l'ensemble (13) d'alimentation et de commande comporte des premiers moyens de détection (35) de la première caractéristique des impulsions superposées au courant d'alimentation et des seconds moyens de détection (37) de la seconde caractéristique de ces impulsions afin de produire un premier signal fonction de la grandeur électrique (Ve) fournie par le thermostat et un second signal (Vh) fonction de l'état du contact (37) de l'horloge de programmation.

2. Dispositif selon la revendication 1, caractérisé en ce que l'ensemble (12) thermostat-programmateur comprend des moyens de redressement (22) pour permettre l'alimentation des circuits de cet ensemble (12) avec une polarité convenable, indépendamment de la nature continue ou alternative et de la polarité de la tension entre les conducteurs de la ligne bifilaire (10, 11) à leur raccordement à l'ensemble thermostat-programmateur.

3. Dispositif selon l'une quelconque des revendications 1 et 2, caractérisé en ce que l'une des caractéristiques variables est l'amplitude des impulsions; et les premiers moyens de détection (35) comportent un détecteur de variations d'amplitude du dourant dans les conducteurs (10, 11).

4. Dispositif selon l'une quelconque des revendications 1 à 3, caractérisé en ce que l'une des caractéristiques variables est le rapport cyclique des impulsions; et les seconds moyens de détection (37) comportent un détecteur de variation de valeur moyenne du courant dans les conducteurs (10, 11).

5. Dispositif selon la revendication 1, caractérisé en ce que le signal électrique supplémentaire sous forme d'un signal modulé est superposé au courant d'alimentation et aux impulsions.

6. Dispositif selon l'une quelconque des revendications 1 à 5, caractérisé en ce que l'ensemble (13) d'alimentation et de commande comporte un circuit convertisseur (34) fournissant aux premiers et seconds moyens de détection (35, 37) une tension représentative de l'intensité du courant dans les conducteurs.

## Patentansprüche

1. Vorrichtung zur Temperaturregelung mit: einer ersten, ein Thermostat-Programmschaltwerk bildenden Gruppe (12), die einen elektronischen Raumthermostat (23) zur Abgabe einer als Funktion des Unterschiedes zwischen einer gemessenen Temperatur und einer Einstelltemperatur variablen elektrischen Größe (Ve) und eine Programmieruhr (26) zum Steuern des Schließens eines elektrischen Kontakts (27) zu einem vorbestimmten Zeitpunkt umfaßt; einer zweiten Versorgungs- und Steuergruppe (13) mit Mitteln (32) zur Stromversorgung der Kreise der ersten und der zweiten Gruppe und Mitteln (39) zum Steuern eines Heiz- oder Klimageräts; und einer bifilaren Verbindung (10, 11), die die erste und die zweite Gruppe zur Versorgung der ersten Gruppe mit elektrischer Spannung von den Versorgungsmitteln und zum Übertragen einer als Funktion der elektrischen Größe (Ve) und des offenen oder geschlossenen Zustandes des Kontakts (27) variablen Information zur zweiten Gruppe verbindet, welche Vorrichting dadurch gekennzeichnet ist, daß:

— die Gruppe (12) aus Thermostat-Programmschaltwerk einen Generator (28, 14) von elektrischen Signalen zwecks Überlagerung von Stromimpulsen über den in den Leitungen (10, 11) zur Versorgung dieser ersten Gruppe fließenden Versorgungsstrom, von welchen Stromimpulsen zumindest eine erste variable Charakteristik für die vom Thermostat (23) gelieferte elektrische Größe steht und zumindest eine zweite variable, von der ersten unterschiedliche Charakteristik für den Zustand des Kontakts (27) der Programmieruhr steht, wobei die erste und die zweite Charakteristik der Impulse unter der Amplitude, der Frequenz, der Dauer und dem Periodenabstand dieser Impulse ausgewählt sind, und

— die Gruppe (13) zur Versorgung und Steuerung erste Detektionsmittel (35) der ersten Charakteristik der dem Versorgungsstrom überlagerten Impulse und zweite Detektionsmittel (37) der zweiten Charakteristik dieser Impulse zur Erzeugung eines ersten Signals als Funktion der von Thermostat gelieferten elektrischen Größe (Ve) und eines zweiten Signals (Vh) als Funktion des Zustandes des Kontakts (37) der Programmieruhr umfaßt.

2. Vorrichtung nach Anspruch 1, dadurch gekennzeichnet, daß die Gruppe (12) aus Thermostat-Programmschaltwerk Gleichrichtmitteln (22) umfaßt, um die Versorgung der Kreise dieser Gruppe (12) mit richtiger Polarität zu gestatten, unabhängig von der kontinuierlichen oder wechselnden Beschaffenheit und von der Polarität der Spannung zwischen den Leitern der bifilaren Leitung (10, 11) und ihren Anschlüssen an die Gruppe aus Thermostat-Programmschaltwerk.

3. Vorrichtung nach einem der Ansprüche 1 und 2, dadurch gekennzeichnet, daß eine der variablen Charakteristiken die Amplitude der Impulse ist und die ersten Detektionsmittel (35) einen Amplitudenveränderungs-Detektor des Stroms in den Leitungen (10, 11) umfassen.

4. Vorrichtung nach einem der Ansprüche 1 bis 3, dadurch gekennzeichnet, daß eine der variablen Charakteristiken den Periodenabstand der Impulse ist und die zweiten Detektionsmittel (37) einen Mittelwertveränderungs-Detektor des Stroms in den Leitungen (10, 11) umfassen.

5. Vorrichtung nach Anspruch 1, dadurch gekennzeichnet, daß das zusätzliche elektrische Signal in Form eines modulierten Signals dem Versorgungsstrom und den Impulsen überlagert ist.

6. Vorrichtung nach einem der Ansprüche 1 bis 5, dadurch gekennzeichnet, daß die Versorgungs- und Steuergruppe (13) einen Umwandlerkreis (34) umfaßt, der eine die Stromstärke in den Leitungen repräsentierende Spannung an die ersten und zweiten Detektionsmittel (35, 37) liefert.

## Claims

1. Temperature regulating device comprising: a first assembly (12) forming thermostat-programmer and being equipped with an electronic thermostat of ambient temperature (23) designed to supply an electrical value (Ve) which is variable as a function of the difference between a measured temperature and a set temperature, and a programming clock (26) designed to control the closure of an electric switch (27) at a predetermined time; a second supply and control assembly (13) comprising means (32) of electrically supplying the circuits of the first and second assembly, and means (39) of controlling a heating or air-conditionning apparatus; and a two-wire system (10, 11) connecting the first and second assemblies in order to feed electrical voltage to the first assembly from said supply means and to transmit to said second assembly an information variable as a function of said electric value (Ve) and of the ON or OFF condition of said switch (27), device characterized in that:
— the thermostat-programmer assembly (12) comprises a generator (28, 14) of electrical signals to superpose on the supply voltage circulating in conductors (10, 11) to supply said first assembly, electric pulses of which at least one variable characteristic is representative of the electrical value (Ve) supplied by the thermostat (23) and of which at least a second variable characteristic, different from the first, is representative of the condition of the switch (27) of the programming clock, said first and second characteristics of the pulses being selected from the amplitude, the frequency, the duration and cyclic ratio of said pulses, and
— the supply and control assembly (13) comprises first means (35) of detecting the first characteristic of the pulses superposed on the electric supply, and second means (37) of detecting the second characteristic of said pulses in order to produce a first signal as a function of the electrical value (Ve) supplied by the thermostat and a second signal (Vh) as a function of the state of switch (37) of the programming clock.

2. Device according to claim 1, characterized in that the thermostat-programmer assembly (12) comprises rectifying means (22) permitting to supply the circuits of this assembly (12) with a suitable polarity, independently of the continuous or alternate nature and of the polarity of the voltage between the conductors of the two-wire system (10, 11) where they connect with the thermostat-programmer assembly.

3. Device according to any one of claims 1 and 2, characterized in that one of the variable characteristics is the amplitude of the pulses; and the first detection means (35) comprise means of detecting the variations in amplitude of the voltage in conductors (10, 11).

4. Device according to any one of claims 1 to 3, characterized in that one of the variable characteristics is the cyclic ratio of the pulses; and the second detection means (37) comprise means of detecting the variation of the mean value of the voltage in conductors (10, 11).

5. Device according to claim 1, characterized in that the additional electrical signal in the form of a modulated signal is superposed to the supply voltage and to the pulses.

6. Device according to any one of claims 1 to 5, characterized in that the control and supply assembly (13) comprises a converter circuit (34) which supplies to the first and second detection means (35, 37) a voltage representing the intensity of the current in the conductors.

Fig. 2

Fig. 1

**0 042 344**

Fig.3